# EUROPÄISCHE PATENTANMELDUNG

(11) **EP 1 555 103 A1**
(43) Veröffentlichungstag der Anmeldung: **20.07.2005**
(21) Anmeldenummer: 05000180.9
(22) Anmeldetag: 07.01.2005
(51) Int. Cl.: B29C 35/08, C08J 3/28, C08J 7/18, B05D 3/06

(54) **Verfahren und Vorrichtung zur Härtung von radikalisch polymerisierbaren Beschichtungen von Oberflächen**

(30) Priorität: 15.01.2004 DE 102004002129
(71) Anmelder: arccure technologies GmbH, 59557 Lippstadt (DE)
(72) Erfinder: Bisges, Michael, 59557 Lippstadt (DE)
(74) Vertreter: Kohlmann, Kai, Dipl.-Ing.

(57) **Zusammenfassung**

Die Erfindung betrifft ein Verfahren und eine Vorrichtung zur Härtung von radikalisch polymerisierbaren Beschichtungen von Oberflächen, wobei Radikale eines Gases oder Gasgemisches unter Einwirkung von elektromagnetischer Strahlung gebildet werden und die Polymerisation unmittelbar durch die Radikale eingeleitet wird.

## Beschreibung

Die Erfindung betrifft ein Verfahren zur Härtung von radikalisch polymerisierbaren Beschichtungen sowie eine Vorrichtung zur Durchführung des Verfahrens.

Derartige Verfahren kommen beispielsweise bei der Trocknung und Aushärtung von Bedruckungen, Lackierungen und Kunststoffbeschichtungen zum Einsatz. Hervorzuheben sind die Härtung von Lackierungen in der Automobil- und Möbelindustrie.

Bei der UV-Strahlungshärtung von radikalisch polymerisierbaren Beschichtungen mit Photoinitiatoren kann eine starke Inhibierung der Polymerisation durch Sauerstoff auftreten. Dabei reagiert der Sauerstoff mit den Photoinitiatoren, die in der polymerisierbaren Beschichtung enthalten sind. Hierdurch verzögert sich die Verkettung und damit die Aushärtung der Beschichtung.

Man versucht der Sauerstoffinhibierung durch den Einsatz hoher Photoinitiatormengen und/oder einer höheren UV-Strahlungsdosis entgegen zu wirken. Außerdem versucht man, die Sauerstoffinhibierng durch eine Strahlungshärtung in einer inerten Atmosphäre mit Stickstoff zu verringern. Die Verwendung von Stickstoff als Inertgas ist jedoch problematisch. Das spezifische Gewicht von Stickstoff ist kleiner als das spezifische Gewicht der Luft, so dass der Stickstoff nach oben verdrängt wird. Hierdurch entsteht ein sehr hoher Verbrauch an Stickstoff.

In der DE 201 20 719 U1 wird daher ein System zur Bestrahlungshärtung von radikalisch polymerisierbaren Beschichtungen vorgeschlagen, bei dem sich das zu bestrahlende Objekt während der Bestrahlung in gasförmigen CO₂ befindet. Die Verwendung von gasförmigen CO₂ ist deshalb vorteilhaft, weil gasförmiges CO₂ schwerer als Luft ist, das heißt, es ist weniger flüchtig, wodurch sich ein wesentlich geringerer Gasverbrauch und geringere Kosten ergeben, als bei einer Bestrahlung unter Stickstoff. Um Verwirbelungen im CO₂ zu vermeiden, ist die UV-Strahlungsquelle von der das zu bestrahlende Objekt aufnehmenden Bestrahlungskammer luftdicht abgetrennt. Als Trennmaterialien werden Glas oder Quarz genannt.

Nachteilig bei den bekannten Härtungsverfahren ist, dass zur Einleitung der radikalischen Polymerisation der Beschichtungen Photoinitiatoren in der Beschichtung zwingend erforderlich sind. Des weiteren können nur solche Beschichtungen gehärtet werden, die im direkten Strahlengang der UV-Strahlungsquelle liegen. Dies hat zur Folge, dass Beschichtungen auf Oberflächen von Hinterschneidungen mit den bekannten Verfahren nicht gehärtet werden können, da die Strahlung nicht zu den Photoinitiatoren gelangt.

Ausgehend von diesem Stand der Technik liegt der Erfindung die Aufgabe zugrunde, ein Verfahren zur Härtung von radikalisch polymerisierbaren Beschichtungen von Oberflächen anzugeben, dass die genannten Nachteile nicht aufweist.

Die Lösung beruht auf dem Gedanken, die Härtung nicht durch Initiatoren einzuleiten, die beim Auftreffen der UV-Strahlung in Radikale zerfallen, sondern die zur Einleitung der Polymerisation der Beschichtung notwendigen Radikale durch ein Gas der Beschichtung zuzuführen.

Im einzelnen wird die Aufgabe dadurch gelöst, dass Radikale eines Gases oder Gasgemisches unter Einwirkung von elektromagnetischer Strahlung gebildet werden und die Polymerisation der Beschichtung unmittelbar durch die Radikale eingeleitet wird. Die durch die elektromagnetische Strahlung aktivierten Radikale des Gases diffundieren in die Beschichtung ein und lösen die für die Polymerisation erforderliche Kettenreaktion in den Polymerketten aus.

Der im Stand der Technik gewählte Umweg über eine Inertisierung der Umgebung der Beschichtung sowie Einleitung der radikalischen Polymerisation durch Bestrahlung von Photoinitiatoren in der Beschichtung entfällt. Hierdurch wird eine erhebliche Vereinfachung der Verfahrensführung erreicht, da die mit der Inertisierung der Umgebung verbundenen Probleme vollständig entfallen. Da die Einleitung der Polymerisation nicht mehr durch Photoinitiatoren, sondern unmittelbar durch das aktivierte Gas erfolgt, ist eine direkte Bestrahlung der Beschichtung nicht mehr erforderlich. Hieraus resultiert die Möglichkeit, mit dem erfindungsgemäßen Verfahren auch Beschichtungen auf Oberflächen von Hinterschneidungen oder anderen, nicht im Strahlengang liegenden Oberflächen wirksam auszuhärten. Schließlich ist es nach dem erfindungsgemäßen Verfahren möglich und vorteilhaft, vollständig auf Photoinitiatoren zu verzichten. Der Verzicht reduziert die Kosten der polymerisierbaren Beschichtung.

Bei dem erfindungsgemäßen Verfahren wird die Polymerisation durch eine Reduktion der Photoinitiatoren im Gegensatz zum Stand der Technik beschleunigt. In vorteilhafter Ausgestaltung der Erfindung weist die Beschichtung daher keinerlei Photoinitiatoren auf.

In einer besonders einfachen Ausgestaltung des erfindungsgemäßen Verfahrens wird Sauerstoff oder Luft ultravioletter Strahlung ausgesetzt und in Ozon und Sauerstoffradikale umgewandelt. Das sehr reaktive Ozon und die Sauerstoffradikale leiten die Polymerisation in der Beschichtung, insbesondere bis zu Schichtdicken von 100 *µ*m ein, in dem das Ozon und die Sauerstoffradikale in die Beschichtung eindiffundieren.

Für eine optimale Einleitung der Polymerisation ist es vorteilhaft, wenn der die Radikale enthaltene Gasstrom auf die zu härtende Beschichtung gerichtet und über diese geführt wird. Dies kann beispielsweise durch die Anordnung einer Absaugung für den Gasstrom angrenzend an die Ränder der Beschichtung bewirkt werden. Des weiteren ist es vorteilhaft, dass der auf die Beschichtung auftreffende Gasstrom einen Überdruck gegenüber dem normalen Luftdruck von etwa 1 bar aufweist.

Eine besonders effiziente Bildung von Ozon- und Sauerstoffradikalen wird erreicht, wenn der Sauerstoff oder das den Sauerstoff enthaltene Gasgemisch die Strahlungsquelle für die UV-Strahlung umspült. Hierdurch wird zugleich die Strahlungsquelle für die UV-Strahlung wirksam gekühlt. Bei der UV-Strahlungsquelle handelt es sich vorzugsweise um eine sogenannte Mitteldrucklampe mit einem Emissionsspektrum im Wellenlängenbereich von 180 bis 260 nm. Die UV-Strahlung mit einer Wellenlänge um 180 nm wandelt den Sauerstoff in Ozon um. Die UV-Strahlung mit einer Wellenlänge um 253 nm wandelt das Ozon in Sauerstoffradikale um.

Wenn der zu härtenden Beschichtung zumindest zeitweilig während der Polymerisation Wärmeenergie zugeführt wird, verbessert sich die Diffusion der aus dem Gas oder Gasgemisch gebildeten Radikale in tiefere Schichten. Hierdurch wird die Härtung beschleunigt.

Eine weitere erhebliche Beschleunigung der Härtung lässt sich erzielen, wenn die Beschichtung zumindest zeitweilig gleichzeitig mit dem die Radikale enthaltenen Gasstrom und UV-Strahlung beaufschlagt wird. Des weiteren lässt sich durch UV-Strahlung die laminare Grenzschicht, die besonders bei flachen, bewegten Substraten direkt an der Oberfläche der Beschichtung angelagert ist, gut aktivieren. Direkt an der Oberfläche der Beschichtung ist die Geschwindigkeit der Umgebungsluft gleich der Geschwindigkeit der Oberfläche. Diese "mitgerissene" Schicht aus Umgebungsluft wird laminare Grenzschicht genannt. Besonders bei dem Verfahren der Inertisierung ist es extrem problematisch die laminare Grenzschicht von der Beschichtung zu lösen und durch ein Inertgas zu ersetzen.

Vorteilhafte Vorrichtungen zur Durchführung des erfindungsgemäßen Verfahrens ergeben sich aus den Merkmalen der Ansprüche 11 bis 16. Um die Bildung der Radikale zu verbessern, ist es in einer Ausgestaltung der Vorrichtung vorgesehen, dass der Bestrahlungsraum von einem jede Strahlungsquelle umgebenen Gehäuse mit einer Austrittsöffnung begrenzt wird und an den Innenwänden des Gehäuses mindestens ein die Strahlung in Richtung der Austrittsöffnung reflektierender Reflektor angeordnet ist. Der Reflektor ist insbesondere ein dichroitischer Reflektor, der insbesondere UV-Strahlung eines UV-Mitteldruckstrahlers mit einer Wellenlänge von 253 nm reflektiert. Dies ist die Wellenlänge, die das Ozon in die Sauerstoffradikale umwandelt. In dem der Reflektor derart in dem Gehäuse angeordnet ist, dass die Strahlung in Richtung der Austrittsöffnung reflektiert wird, wird sichergestellt, dass im Bereich der Austrittsöffnung des Bestrahlungsraums vorhandenes Ozon weitestgehend in Sauerstoffradikale umgewandelt wird.

Zur weiteren Verbesserung der Radikalisierung des Sauerstoffs ist es in einer Ausgestaltung der erfindungsgemäßen Vorrichtung vorgesehen, dass mindestens eine Barriere zwischen der Strahlungsquelle und der zu härtenden Beschichtung angeordnet ist. Die Barriere kann beispielsweise ein Reflektionsfilter sein, der UV-Strahlung mit einer Wellenlänge um 253 mn durchlässt, während die übrigen Spektren reflektiert werden. Hierdurch wird bewirkt, dass auf die Beschichtung nahezu ausschließlich UV-Strahlung mit einer Wellenlänge um 253 nm auftrifft, die vorhandenes Ozon in Sauerstoffradikale umwandelt. Sollen Beschichtungen auf einer ebenen Substratbahn ausgehärtet werden, wird der Härtungsraum entsprechend den Merkmalen des Anspruchs 14 gebildet.

Sollen Beschichtungen auf Körpern, insbesondere mit Hinterschneidungen, gehärtet werden, weist der Härtungsraum der Vorrichtung zur Durchführung des erfindungsgemäßen Verfahrens die Merkmale des Anspruchs 15 auf.

Nachfolgend wird die Erfindung anhand der Figuren näher erläutert. Es zeigen
- Figur 1a: eine schematische Seitenansicht einer Vorrichtung zur Durchführung des Verfahrens für die Härtung ebener Substrate;
- Figur 1b: eine schematische Seitenansicht einer Vorrichtung zur Durchführung des Verfahrens für die Härtung eines Körpers mit Hinterschneidungen sowie
- Figuren 2a,b: eine schematische Darstellung zur Veranschaulichung des erfindungsgemäßen Verfahrens.

Die Vorrichtung zur Durchführung des erfindungsgemäßen Verfahrens wird im wesentlichen von einem Bestrahlungsraum 1 und einem Härtungsraum 2 gebildet. Der Bestrahlungsraum 1 wird von einem doppelwandigen Gehäuse 3 mit einer in einer horizontalen Ebene verlaufenden Austrittsöffnung 4 begrenzt. An den nicht dargestellten Stirnseiten ist das Gehäuse 3 geschlossen ausgeführt.

An der Innenwand des Gehäuses 3 sind zwei teilkreiszylindrische, dichroitische Reflektoren 5, 6 befestigt, die jeweils von einem im oberen Scheitelpunkt des Gehäusequerschnitts angeordneten Zuführungskanal 7 bis an die Austrittsöffnung 4 des Bestrahlungsraumes 1 heranreichen. Der Zuführungskanal 7 erstreckt sich in der Bildebene in Längsrichtung parallel zu der Längsachse eines UV-Mitteldruckstrahlers 8, der etwa im Zentrum des Bestrahlungsraums 1 angeordnet ist. Der Zuführungskanal 7 weist an seiner Unterseite einen Längsschlitz auf, der auf den darunter angeordneten UV-Mitteldruckstrahler 8 gerichtet ist. Die Länge des Längsschlitzes entspricht etwa der Länge des UV-Mitteldruckstrahlers 8.

Seitlich neben der Austrittsöffnung 4 befinden sich in Längsrichtung des Gehäuses erstreckende Ansaugöffnungen 9, 10, die in dem durch das doppelwandige Gehäuse 3 definierten Hohlraum 11 münden. Der Hohlraum 11 besitzt einen Anschluss 12 für einen in der Figur nicht dargestellten Unterdruckerzeuger.

Der Zuführungskanal 7 wiederum ist an einer Stirnseite mit einem Anschluss für einen nicht dargestellten Verdichter verbunden, über den Luft mit einem Überdruck in den Bestrahlungsraum 1 eingeblasen wird. Zur Vergleichsmäßigung des Luftaustritts aus dem Zuführungskanal 7 in den Bestrahlungsraum 1 kann in dessen Längsschlitz ein nicht dargestelltes Strömungssieb angeordnet sein.

Unmittelbar unterhalb des Bestrahlungsraums 1 befindet sich der Härtungsraum 2, der durch die Austrittsöffnung 4 sowie die in geringem Abstand unter der Austrittsöffnung 4 geführte Beschichtung 13 auf einer ebenen Substratbahn 14 begrenzt wird. Seitlich wird der Bestrahlungsraum durch die gedachte Fortsetzung der Innenwände des Bestrahlungsraums begrenzt. Die Pfeile deuten die Bewegungsrichtung 15 der Substratbahn 14 am Bahnein-/auslauf 16 des Härtungsraums 2 an.

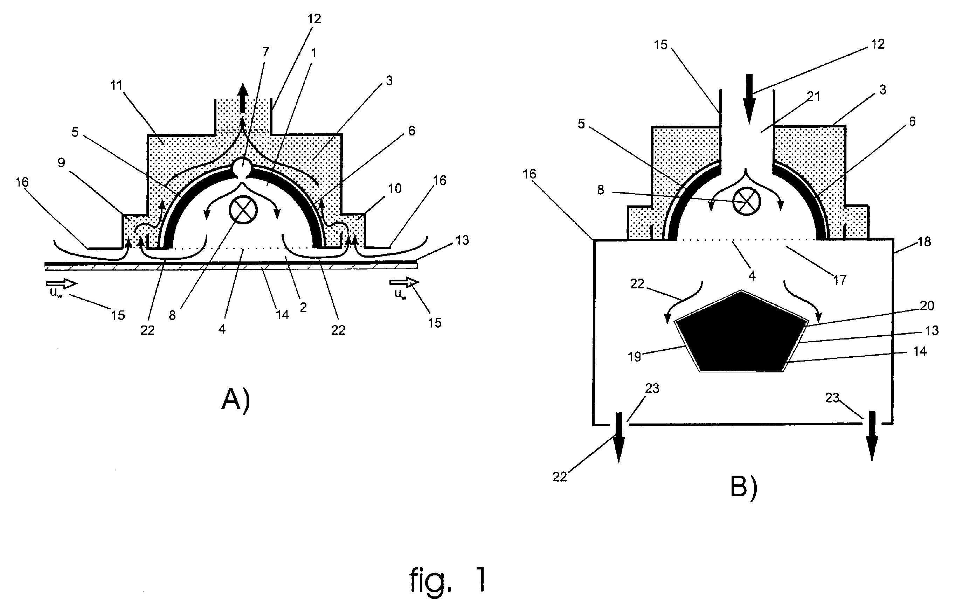

Die Vorrichtung nach Figur 1b unterscheidet sich von der Vorrichtung nach Figur 1a insbesondere durch die Ausbildung des Härtungsraums 2. Der Härtungsraum 2 wird von einem eine Eintrittsöffnung 17 aufweisenden, im übrigen allseitig geschlossenen Gehäuse 18 gebildet. Die Eintrittsöffnung 17 ist mit der Austrittsöffnung 4 des Bestrahlungsraums 1 querschnittsgleich. Das Gehäuse 18 wird zum Zwecke der Härtung mit dem Gehäuse 3 in Verbindung gebracht, so dass die Eintrittsöffnung 17 mit der Austrittsöffnung 4 in Verbindung steht. Vorzugsweise befindet sich zwischen der Eintrittsöffnung 17 und der Austrittsöffnung 4 eine Dichtung, die das Entweichen von Gas verhindert.

In dem Gehäuse 18 befindet sich eine nicht näher dargestellte Aufnahme für einen die polymerisierbare Beschichtung 13 aufweisenden Körper 19, der in der Aufnahme um eine Drehachse 20 drehbar gelagert ist.

Weitere Unterschiede der Vorrichtung nach Figur 1b zu der nach Figur 1a ergeben sich hinsichtlich der Ausgestaltung des Zuführungskanals 21, der abweichend zu der Vorrichtung nach Figur 1a nicht stirnseitig, sondern an seiner Oberseite eingespeist wird. Die Absaugung des radikalisierten Sauerstoffs erfolgt über Öffnungen 23 an der Unterseite des Gehäuses 18.

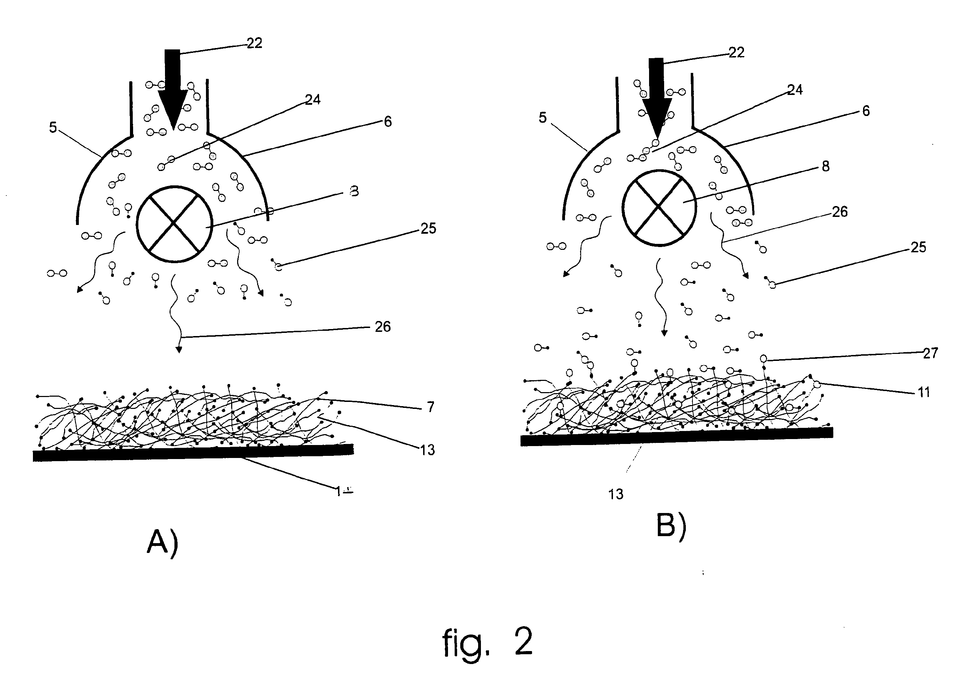

Nachfolgend wird das erfindungsgemäße Verfahren unter Bezugnahme auf die Figuren 1 und 2 erläutert:
Über den Zuführungskanal 7, 21 wird Luft in den Bestrahlungsraum 1 geführt. Unter Einwirkung der UV-Strahlung 26 des UV-Mitteldruckstrahlers 8 werden die Sauerstoffmoleküle 24 in Ozon und Sauerstoffradikale 25 umgewandelt. Figur 2b verdeutlicht, dass das sehr reaktive Ozon und die Sauerstoffradikale 25 in die polymerisierbare Beschichtung 13 mit einer Schichtdicke von etwa 100 *µ*m eindiffundieren. Die Radikale 25 aktivieren ungesättigte Doppelbindungen in der Beschichtung 13 und lösen damit die für die Polymerisation erforderlich Kettenreaktion aus. In Figur 2b ist erkennbar, wie sich die Radikale 25 an das Ende der Polymerketten 27 anlagern.

Der entscheidende Vorteil des erfindungsgemäßen Verfahrens besteht darin, dass eine direkte Einstrahlung der UV-Strahlung 26 auf die Beschichtung 13 nicht erforderlich ist, sondern das Auftreffen der Radikale 25 auf die Beschichtung 13, wie in Figur 2 dargestellt, ausreichend ist. Im Ergebnis ist es daher möglich, den in Figur 1b dargestellten Körper auch ohne Rotation um die Drehachse vollständig auszuhärten, sofern aufgrund der Gasführung gewährleistet ist, dass der Gasstrom 22 auf sämtliche zu härtenden Bereiche der Beschichtung auftrifft.

### Bezugszeichenliste

| | |
|---|---|
| 1. | Bestrahlungsraum |
| 2. | Härtungsraum |
| 3. | Gehäuse |
| 4. | Austrittsöffnung |
| 5. | Reflektor |
| 6. | Reflektor |
| 7. | Zuführungskanal |
| 8. | UV-Mitteldruckstrahler |
| 9. | Ansaugöffnung |
| 10. | Ansaugöffnung |
| 11. | Hohlraum |
| 12. | Anschluss Unterdruckerzeuger |
| 13. | Beschichtung |
| 14. | Substratbahn |
| 15. | Bewegungsrichtung |
| 16. | Bahnein-/auslauf |
| 17. | Eintrittsöffnung |
| 18. | Gehäuse |
| 19. | Körper |
| 20. | Drehachse |
| 21. | Zuführungskanal |
| 22. | Gasstrom |
| 23. | Öffnungen |
| 24 | Sauerstoffmoleküle |
| 25. | Sauerstoffradikale |
| 26. | UV-Strahlung |
| 27. | Polymerketten |

## Patentansprüche

1. Verfahren zur Härtung von radikalisch polymerisierbaren Beschichtungen von Oberflächen, **dadurch gekennzeichnet, dass** Radikale (25) eines Gases oder Gasgemisches (22) unter Einwirkung von elektromagnetischer Strahlung (26) gebildet werden und die Polymerisation unmittelbar durch die Radikale eingeleitet wird.

2. Verfahren nach Anspruch 1, **dadurch gekennzeichnet, dass** aus Sauerstoff oder aus dem Sauerstoff enthaltenden Gasgemisch (22) unter Einwirkung von UV-Strahlung (26) Ozon und Sauerstoffradikale (25) gebildet werden.

3. Verfahren nach einem der Ansprüche 1 bis 2, **dadurch gekennzeichnet, dass** UV- Strahlung (26) mit Wellenlängen in einem Bereich von 180 - 260 nm verwendet wird.

4. Verfahren nach einem der Ansprüche 1 bis 3, **dadurch gekennzeichnet, dass** der zu polymerisierende Beschichtung (13) wesentlich weniger Fotoinitiatoren zugegeben werden, als einer im übrigen übereinstimmenden Beschichtung, die mit herkömmlicher Strahlungshärtung gehärtet wird.

5. Verfahren nach einem der Ansprüche 1 bis 3, **dadurch gekennzeichnet, dass** der zu polymerisierenden Beschichtung (13) keine Fotoinitiatoren zugegeben werden.

6. Verfahren nach einem der Ansprüche 1 bis 5, **dadurch gekennzeichnet, dass** der die Radikale enthaltende Gasstrom (22) auf die zu härtende Beschichtung (13) gerichtet wird.

7. Verfahren nach einem der Ansprüche 1 bis 6, **dadurch gekennzeichnet dass** der auf die Beschichtung (13) auftreffende Gasstrom (22) einen Überdruck gegenüber dem normalen Luftdruck von 1 bar aufweist.

8. Verfahren nach einem der Ansprüche 1 bis 7, **dadurch gekennzeichnet, dass** die Beschichtung (13) zumindest zeitweilig gleichzeitig mit dem die Radikale (25) enthaltenden Gasstrom (22) und mit UV-Strahlung beaufschlagt wird.

9. Verfahren nach einem der Ansprüche 1 bis 8, **dadurch gekennzeichnet, dass** der zu härtenden Beschichtung (13) zumindest zeitweilig Wärmeenergie zugeführt wird.

10. Verfahren nach einem der Ansprüche 1 bis 9, **dadurch gekennzeichnet, dass** die Beschichtung (13) mit UV-Strahlung (26) beaufschlagt wird bevor der die Radikale (25) enthaltende Gasstrom auf die zu härtende Beschichtung gerichtet wird.

11. Vorrichtung zur Durchführung des Verfahrens nach einem der Ansprüche 1 bis 10 mit einem Bestrahlungsraum (1) und einem Härtungsraum (2), wobei in dem Bestrahlungsraum mindestens eine Zuführung (7,21) für das Gas oder Gasgemisch mündet und in dessen Strömungsrichtung mindestens eine elektromagnetische Strahlungsquelle (8) zur Erzeugung der Radikale des Gases oder Gasgemisches angeordnet ist und wobei in dem Härtungsraum (2) die radikalisch polymerisierbare Beschichtung (13) mit dem die Radikale enthaltenden Gasstrom (22) zusammentreffen und dem Härtungsraum eine Absaugung (9, 10, 23) für den Gasstrom zugeordnet ist.

12. Vorrichtung nach Anspruch 11, **dadurch gekennzeichnet, dass** jede Strahlungsquelle (8) ein UV-Mitteldruckstrahler ist.

13. Vorrichtung nach Anspruch 11 oder 12, **dadurch gekennzeichnet, dass** der Bestrahlungsraum (1) von einem jede Strahlungsquelle (8) umgebenden Gehäuse (3) mit einer Austrittsöffnung (4) begrenzt wird und an den Innenwänden des Gehäuses mindestens ein die Strahlung in Richtung der Austrittsöffnung (4) reflektierender Reflektor (5,6) angeordnet ist.

14. Vorrichtung nach einem der Ansprüche 11 bis 13, **dadurch gekennzeichnet, dass** der Härtungsraum (2) durch die ebene Austrittsöffnung (4) des Bestrahlungsraums (1) sowie die in geringem Abstand unter der Austrittsöffnung geführte Oberfläche der radikalisch polymerisierbaren Beschichtung (13) auf einer ebenen Substratbahn (14) begrenzt wird.

15. Vorrichtung nach einem der Ansprüche 11 bis 13, **dadurch gekennzeichnet, dass** der Härtungsraum (2) von einem eine Eintrittsöffnung aufweisenden Gehäuse (18) gebildet wird, wobei dessen Eintrittsöffnung (17) mit der Austrittsöffnung (4) des Bestrahlungsraumes (1) in Verbindung steht und der Härtungsraum (2) mindestens eine Aufnahme für einen die radikalisch polymerisierbare Beschichtung (13) aufweisenden Körper (19) aufweist und in Strömungsrichtung des die Radikale enthaltenden Gasstroms (22) hinter jeder zu härtenden Beschichtung (13) mindestens eine Öffnung (23) für die Gasabsaugung in dem Gehäuse (18) angeordnet ist.

16. Vorrichtung nach einem der Ansprüche 11 bis 15, **dadurch gekennzeichnet, dass** mindestens eine Barriere den direkten Strahlengang von jeder Strahlungsquelle (8) auf die zu härtende Beschichtung (13) ausblendet.
